# DEMANDE DE BREVET EUROPEEN

(11) **EP 0 849 617 A1**
(43) Date de publication de la demande: **24.06.1998**
(21) Numéro de dépôt: 97403004.1
(22) Date de dépôt: 11.12.1997
(51) Int. Cl.: G02B 6/44

(54) **Câble à fibres optiques à structure dissymétrique**

(30) Priorité: 19.12.1996 FR 9615637
(71) Demandeur: ALCATEL ALSTHOM COMPAGNIE GENERALE D'ELECTRICITE, 75008 Paris (FR)
(72) Inventeur: Bonicel, Jean-Pierre, 92500 Rueil Malmaison (FR)
(74) Mandataire: Buffière, Michelle

(57) **Abrégé**

La présente invention concerne un câble à fibres optiques.

Ce câble comprend, dans une gaine, d'une part un tube dans lequel sont disposées les fibres optiques et d'autre part un élément de renfort unique, le tout étant agencé de sorte que l'axe neutre X'X du tube 12, 22, 32 et celui du câble coïncident.

## Description

La présente invention concerne un câble comprenant un petit nombre de fibres optiques, d'une structure très simple et, par conséquent, très économique à réaliser.

De tels câbles comprennent, dans une gaine, un élément de renfort unique et généralement un seul logement tel qu'un tube dans lequel sont disposées les fibres optiques. Concrètement, la gaine est extrudée sur le tube et l'élément de renfort agencés à proximité l'un de l'autre.

A titre d'exemple, la demande internationale WO 96/15466 enseigne un câble économique présentant la structure décrite ci-dessus. L'élément de renfort, le tube et la gaine ont tous trois une section circulaire. Il apparaît que lorsque ce câble est courbé, le tube peut être mis en compression ou en traction selon le sens de la courbure. Or, l'homme du métier sait bien qu'il faut absolument éviter de soumettre des fibres optiques à une contrainte de traction. Une telle contrainte a notamment pour effet d'augmenter l'atténuation et de diminuer la durée de vie des fibres.

La présente invention a ainsi pour objet un câble comprenant un logement dans lequel sont disposées des fibres optiques, ce câble simple et économique présentant une structure telle que les fibres ne supportent pratiquement pas de contraintes en cas de courbure du câble.

Selon l'invention, le câble, qui comprend une gaine, un logement prévu dans ladite gaine et dans lequel sont disposées les fibres optiques, et un élément de renfort unique noyé dans la gaine et présente transversalement des axes de ladite gaine, dudit logement et dudit élément de renfort situés sur un axe commun, est caractérisé en ce que au moins l'une des parties constitutives dudit câble et définies par ladite gaine, ledit logement et ledit élément de renfort est de section transversale oblongue, dont la plus grande dimension est située sur ledit axe commun constituant ainsi un axe neutre de pliage préférentiel dudit câble.

On impose ainsi une courbure préférentielle au câble de sorte que l'axe longitudinal du logement ne subisse aucune contrainte.

Il s'ensuit que les fibres optiques sont, quant à elles, soumises à des contraintes minimales.

Ainsi, un élément à section circulaire dispose d'une pluralité d'axes neutres qui coïncident avec les diamètres de cette section. La position de l'axe neutre d'un câble dépend uniquement de la forme, de la rigidité et de l'agencement des différents composants entrant dans sa constitution. Ainsi, la définition structurelle d'un câble détermine l'emplacement de son axe neutre. On remarquera par ailleurs que la demande internationale citée plus haut ne prévoit aucune mesure particulière pour imposer une courbure préférentielle au câble.

Selon un premier mode de réalisation du câble selon l'invention, l'élément de renfort présente une section oblongue, la plus grande dimension de cette section définissant l'axe neutre du câble.

Selon un deuxième mode de réalisation du câble selon l'invention, le logement présente une section oblongue, la plus grande dimension de cette section définissant l'axe neutre du câble.

Dans ce premier ou deuxième mode de réalisation la gaine est de section circulaire.

Selon un troisième mode de réalisation du câble selon l'invention, la gaine présente une section oblongue, la plus grande dimension de cette section définissant l'axe neutre du câble.

Naturellement, ces trois modes de réalisation qui peuvent être mis en oeuvre individuellement ne sont pas exclusifs les uns des autres. Il est possible de combiner deux de ces modes dans un même câble ou même de les appliquer tous les trois.

A titre d'exemple, l'élément de renfort peut être réalisé en matière synthétique renforcée ou en métal.

Avantageusement, le logement est soit un tube, soit une micro-gaine, soit un espace libre ménagé dans la gaine.

La présente invention apparaîtra maintenant de manière plus détaillée dans la description qui suit de modes de réalisation donnés à titre d'exemple en référence aux figures annexées qui représentent :
- la figure 1, un premier mode de réalisation du câble selon l'invention,
- la figure 2, un second mode de réalisation du câble selon l'invention,
- la figure 3, un troisième mode de réalisation du câble selon l'invention.

Le câble de l'invention comprend donc essentiellement trois composants, à savoir un logement tel qu'un tube pourvu de fibres optiques, un élément de renfort unique également connu sous le nom de porteur ou d'élément porteur et une gaine. Les composants du câble sont agencés, compte-tenu de leurs caractéristiques propres (forme, rigidité) de sorte que l'axe neutre du câble corresponde à l'axe neutre du tube.

Par axe neutre, on entend un axe transverse autour duquel le câble va se courber naturellement s'il n'est pas astreint à se courber selon un axe différent. En fait, lorsqu'un câble suit un profil courbé, il va se disposer de sorte qu'en tout point de ce profil l'axe neutre soit perpendiculaire au plan contenant le câble. L'axe neutre du câble correspond à l'ensemble des points de ce câble qui ne sont soumis à aucune contrainte lorsque le câble est courbé. L'axe neutre du tube qui figure la position moyenne des fibres optiques dans ce tube coïncidant avec l'axe neutre du câble, les contraintes mécaniques subies par les fibres, si elles ne sont pas toutes nulles, sont toutefois rendues minimales.

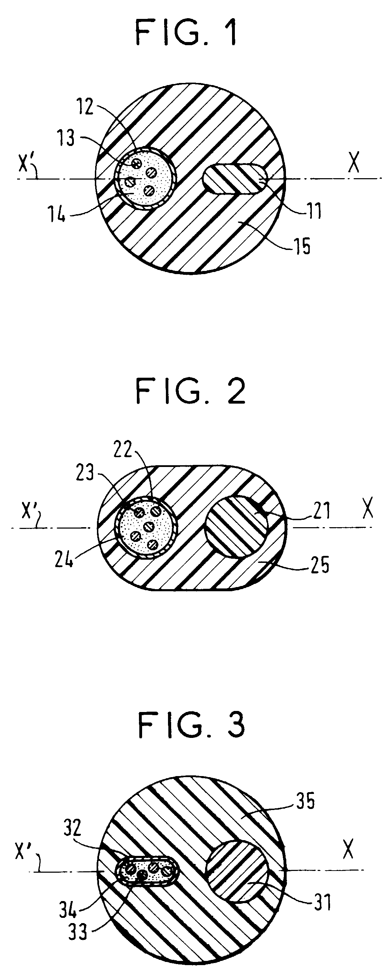

En référence à la figure 1, un premier mode de réalisation du câble propose de donner une section oblongue à l'élément de renfort 11. L'élément de renfort ayant par hypothèse une rigidité plus importante que les autres composants du câble, la plus grande dimension de cette section oblongue va orienter l'axe neutre X'X du câble. Le tube 12 présente ici une section circulaire. Il est réalisé en matière plastique telle que polyoléfine ou thermoplastique, en matériau réticulable, ou il peut même être métallique. Le tube est pourvu de fibres optiques 13 noyées dans un classique matériau de remplissage 14. La gaine 15 du câble, également de section circulaire, est réalisée par extrusion. Le tube 12 étant de section circulaire, tout diamètre de cette section en définit un axe neutre. Le tube est donc disposé dans le câble de sorte qu'un diamètre de sa section soit aligné avec l'axe neutre X'X.

Selon un second mode de réalisation du câble représenté à la figure 2, l'axe neutre du câble est imposé par la gaine 25 de ce câble. Cette gaine présente une section oblongue ou allongée et, compte-tenu de la quantité de matière relativement importante de cette gaine 25, la plus grande dimension de sa section définit l'axe neutre X'X du câble. L'élément de renfort 21, ici de section circulaire, est agencé pour qu'un diamètre de sa section soit aligné avec l'axe neutre X'X. De même, comme dans le cas précédent, le tube 22, pourvu de fibres 23 et de matériau de remplissage 24, également de section circulaire, est positionné pour qu'un diamètre de sa section soit aligné avec l'axe neutre X'X.

Il est naturellement possible de combiner les deux modes de réalisation précédents en prévoyant un élément de renfort 11 de section oblongue et une gaine 25 de section également oblongue, l'axe neutre X'X coïncidant avec la plus grande dimension des sections de l'élément de renfort 11 et de la gaine 25 ainsi qu'avec un diamètre de la section circulaire du tube 12,22.

La figure 3 représente un troisième mode de réalisation selon lequel le tube 32 présente une section oblongue dont la dimension la plus grande est sensiblement plus importante que sa dimension la plus petite. Le tube 32 est encore pourvu de fibres optiques 33 enrobées par un matériau de remplissage 34. L'élément de renfort 31 et la gaine 35 présentent ici une section circulaire. Les dimensions du tube, de l'élément de renfort et de la gaine, compte-tenu de leurs rigidités respectives, sont fixées de sorte que la plus grande dimension de la section du tube 32 définisse l'axe neutre X'X du câble sur lequel sont alignés des diamètres des sections de l'élément de renfort 31 et de la gaine 35.

Il est naturellement possible de combiner ce troisième mode de réalisation avec l'un, l'autre ou les deux modes précédents.

En premier lieu, si l'élément de renfort 11 et le tube 32 sont de formes oblongues, il est avantageux d'aligner les plus grandes dimensions des sections de ces deux composants pour ainsi définir l'axe neutre du câble.

En second lieu, si l'élément de renfort 31 est circulaire, le tube 34 et la gaine 25 présentant une section allongée, il est souhaitable d'aligner les plus grandes dimensions des sections du tube et de la gaine avec un diamètre de la section de l'élément de renfort.

En troisième lieu, si l'élément de renfort 11, le tube 34 et la gaine 25 présentent chacun une section oblongue, le câble prendra préférentiellement la forme d'un ruban dans lequel les plus grandes dimensions des sections des trois composants sont alignées.

Quel que soit le mode réalisation adopté, il est possible de renforcer le tube 12, 22, 32 par l'adjonction de mèches sur sa surface externe, ces mèches étant par exemple en verre ou en aramide.

Par ailleurs, le tube 12, 22, 32 peut être remplacé par une micro-gaine dans laquelle les fibres optiques sont disposées sans jeu. Cette micro-gaine est particulièrement fine et souple.

De même, le tube 12, 22, 32 peut être tout simplement supprimé, c'est-à-dire que les fibres sont situées dans un espace libre ménagé dans la gaine 15, 25, 35. Cet espace libre correspond en réalité à l'intérieur du tube 12, 22, 32.

L'invention s'applique donc quelle que soit la forme du logement dans lequel sont placées les fibres, qu'il s'agisse en particulier d'un tube, d'une micro-gaine ou bien d'un espace libre.

Il apparaît ainsi que de nombreuses solutions sont disponibles pour mettre en oeuvre l'invention et il n'est pas possible de toutes les décrire. Le point important est que la structure du câble soit ainsi définie que l'axe neutre du logement coïncide avec l'axe neutre X'X du câble.

## Revendications

1. Câble à fibres optiques comprenant une gaine, un logement prévu dans ladite gaine et dans lequel sont disposées lesdites fibres optiques et un élément de renfort unique noyé dans ladite gaine, ladite gaine, ledit logement et ledit élément de renfort présentant transversalement des axes situés sur un axe commun, caractérisé en ce que au moins l'une des parties constitutives dudit câble et définies par ladite gaine (15, 25, 35), ledit logement (12, 22, 32) et ledit élément de renfort (11, 21, 31) est de section transversale oblongue, dont la plus grande dimension est située sur ledit axe commun constituant ainsi un axe neutre (xx') de pliage préférentiel dudit câble.

2. Câble selon la revendication 1, caractérisé en ce que ledit élément de renfort (11) présente une section oblongue, la plus grande dimension de cette section définissant l'axe neutre (X'X) dudit câble.

3. Câble selon l'une quelconque des revendications 1 ou 2, caractérisé en ce que ledit logement (32) présente une section oblongue, la plus grande dimension de cette section définissant l'axe neutre (X'X) dudit câble.

4. Câble selon l'une quelconque des revendications précédentes, caractérisé en ce que ladite gaine (25) présente une section oblongue, la plus grande dimension de cette section définissant l'axe neutre (X'X) dudit câble.

5. Câble selon l'une des revendications 2 et 3, caractérisé en ce que ladite gaine (15, 35) est de section circulaire.

6. Câble selon l'une quelconque des revendications précédentes, caractérisé en ce que ledit élément de renfort (11, 21, 31) est en matière synthétique renforcée.

7. Câble selon l'une quelconque des revendications 1 à 5, caractérisé en ce que ledit élément de renfort (11,21, 31) est métallique.

8. Câble selon l'une quelconque des revendications précédentes, caractérisé en ce que ledit logement est un tube (12, 22, 32).

9. Câble selon l'une quelconque des revendications 1 à 7, caractérisé en ce que ledit logement est une micro-gaine.

10. Câble selon l'une quelconque des revendications 1 à 7, caractérisé en ce que ledit logement est un espace libre ménagé dans ladite gaine (15, 25, 35).
